(19) **Europäisches Patentamt / European Patent Office / Office européen des brevets**

(11) **EP 3 251 205 B1**

(12) # EUROPEAN PATENT SPECIFICATION

(45) Date of publication and mention
of the grant of the patent:
**29.03.2023 Bulletin 2023/13**

(21) Application number: **15701355.8**

(22) Date of filing: **27.01.2015**

(51) International Patent Classification (IPC):
*H02M 7/483* (2007.01)      *H02J 3/36* (2006.01)
*H02J 3/28* (2006.01)       *H02J 3/32* (2006.01)
*H02J 3/26* (2006.01)       *H02J 3/18* (2006.01)
*H02M 1/00* (2006.01)

(52) Cooperative Patent Classification (CPC):
**H02M 7/483; H02J 3/1857; H02J 3/26; H02J 3/32;
H02M 1/0095; H02M 7/4835; Y02E 40/20;
Y02E 40/50**

(86) International application number:
**PCT/EP2015/051556**

(87) International publication number:
**WO 2016/119820 (04.08.2016 Gazette 2016/31)**

(54) **MULTILEVEL CONVERTER WITH ENERGY STORAGE**

MEHRPEGELUMRICHTER MIT ENERGIESPEICHERUNG

CONVERTISSEUR MULTINIVEAU À STOCKAGE D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.12.2017 Bulletin 2017/49**

(73) Proprietor: **Hitachi Energy Switzerland AG
5400 Baden (CH)**

(72) Inventors:
• **TOWNSEND, Christopher**
**2289 Newcastle (AU)**
• **ZELAYA DE LA PARRA, Hector**
**S-722 46 Västerås (SE)**
• **HASLER, Jean-Philippe**
**S-722 44 Västerås (SE)**
• **TENGNER, Tomas**
**S-722 41 Västerås (SE)**

(74) Representative: **AWA Sweden AB
Box 45086
104 30 Stockholm (SE)**

(56) References cited:
**WO-A1-2010/124706      WO-A1-2011/042050
WO-A1-2014/194968      DE-A1- 10 103 031**

• **HIROFUMI AKAGI: "Classification, Terminology,
and Application of the Modular Multilevel
Cascade Converter (MMCC)", IEEE
TRANSACTIONS ON POWER ELECTRONICS,
INSTITUTE OF ELECTRICAL AND ELECTRONICS
ENGINEERS, USA, vol. 26, no. 11, 1 November
2011 (2011-11-01), pages 3119-3130,
XP011369856, ISSN: 0885-8993, DOI:
10.1109/TPEL.2011.2143431**

**Description**

TECHNICAL FIELD

The present disclosure relates to a multilevel power converter connected to an alternating current (AC) network and a load. The converter comprises at least a first and a second phase leg, each phase leg comprising a plurality of cascaded chain link connected cells, each cell comprising a direct current (DC) link capacitor. The present disclosure further relates to a method for performing internal DC link capacitor voltage balancing within a multilevel power converter.

BACKGROUND

Multilevel converters are found in many high power applications in which medium to high voltage levels are present in the system. By virtue of their design, multilevel converters share the system voltage (line-to-line or phase voltages) eliminating the need of series connection of devices. These converters may be connected in Delta or Wye configuration in a variety of well-known topologies. These topologies (and variants thereof) can be used for e.g. High Voltage Direct Current (HVDC) and Flexible Alternating Current Transmission System (FACTS) applications. FACTS is a system composed of static equipment used for the AC transmission of electrical energy. It is meant to enhance controllability and increase power transfer capability of the network. FACTS may be defined as a power electronic based system and other static equipment that provide control of one or more AC transmission system parameters to enhance controllability and increase power transfer capability. Two parameters in the selection among the various topology alternatives are the cost and the losses. Both are related to the total silicon (semi conductor) area used in the converter which is affected by the voltage and current ratings. In addition to steady-state balanced operation of the converter, the designer must take into account the unbalance in the three-phase system. This results in negative sequence currents and voltages that need to be compensated by the converter. The net effect is that the current rating of the valves (or the total number of cells) will increase due to the zero sequence current or voltage that needs to be injected to compensate for the unbalanced condition. The consequence of this higher number of cells is a higher cost and higher losses.

WO 2010/124706 discloses an energy storage device, e.g. a super-capacitor, connected in parallel to a capacitor unit of a multi-stage power converter to compensate for reactive power and exchange the active power with the AC network. The document thus discloses the use of super-capacitors in the converter for exchanging active power with the AC network to compensate for energy storage applications such as frequency regulation, peak shaving, and alike.

The document "Classification, Terminology and Application of the Modular Multilevel Cascade Converter (MMCC)" by HIROFUMI AKAGI, in IEEE TRANSACTIONS ON POWER ELECTRONICS, INSTITUTE OF ELECTRICAL AND ELECTRONICS ENGINEERS, USA, vol. 26, no. 11, 1 November 2021, pages 3119-3130, discloses cascaded multilevel converters.

**SUMMARY**

The present invention solves the problem of higher cost and higher losses associated with negative sequence conditions by introducing energy storage elements in specific chain-link configurations, e.g. for FACTS applications.

The invention is set out in the appended independent claims 1 and 6. Further embodiments of the invention are set out in the appended dependent claims.

According to an aspect of the present invention, there is provided a multilevel power converter connected to an AC network and a load. The converter comprises at least a first and a second phase leg, each phase leg comprising a plurality of cascaded chain link connected cells, each cell comprising a DC link capacitor. At least one cell in each phase leg comprises, in addition to the 20 DC link capacitor, an energy storage element configured for absorbing and supplying active power in the phase leg for converter internal DC link capacitor voltage balancing when compensating for unbalances between the phases of the network or the load without inducing any extra net active power exchange between the converter and the network.

According to another aspect of the present invention, there is provided a method for converter internal DC link capacitor voltage balancing when compensating for unbalances between phases of an AC network or a load which the converter is connected to, without inducing any extra net active power exchange between the converter and the network. The converter comprises at least a first and a second phase leg, each phase leg comprising a plurality of cascaded chain link connected cells, each cell comprising a DC link capacitor. The method comprises obtaining information about phase voltages of the AC network, phase currents consumed by the load, and power injection of the converter, at a point of common coupling (PCC). The method also comprises, based on the obtained information, calculating the amount of active power to be supplied by each phase leg of the converter. The method also comprises, based on the calculation, determining an amount of power to be absorbed or supplied in each converter phase leg by an energy storage element comprised, in addition to the DC link capacitor, in at least one cell in each phase leg, for achieving the capacitor voltage balancing. The method may typically be performed in an embodiment of the converter in accordance with the present disclosure.

In some embodiments of the present invention, the converter is for a FACTS application. Embodiments of the converter or method of the present invention may be especially beneficial for FACTS.

In some embodiments of the present invention, the converter is comprised in a static synchronous compensator (STATCOM). Embodiments of the converter or method of the present invention may be especially beneficial for STATCOMs, e.g. as used in FACTS.

In some embodiments of the present invention, each of the energy storage elements comprises a superconducting magnetic energy storage, a battery, a flywheel or a super-capacitor, preferably a super-capacitor. The storage element used depends on the system in which the converter is comprised, e.g. on the time during which the storage element is preferably able to absorb or supply energy or on the amount of energy which the storage element is preferably able to absorb or supply. For instance, a supercapacitor may typically absorb or supply energy during a time period with a length within the range of 2-60 seconds, e.g. within the range of 10-60 seconds, while a battery may absorb or supply energy for hours making it preferred for applications where the storage elements should be able to absorb or supply energy for more than 60 seconds. In contrast, the DC link capacitor typically is able to absorb or supply energy for less than one second.

In some embodiments of the present invention, the energy storage element in the at least one cell in each phase leg is connected in parallel with the DC link capacitor of the cell. This is one convenient way of connecting the storage element in the cell, but other topologies are also contemplated.

In some embodiments of the present invention, the energy storage element in the at least one cell in each phase leg is configured for absorbing or supplying the active power for a duration of at least 10 seconds e.g. at least 60 seconds. See also the discussion above relating to supercapacitors and batteries, respectively.

In some embodiments of the present invention, at least half, e.g. all, of the cells in each phase leg each comprises an energy storage element configured for the absorbing and supplying of active power in the phase leg. The number of storages used in each leg is dependent on the total storage needed in each leg, as well as the capacity of each storage. Also, to use several storages gives redundancy and increased flexibility, but may increase the cost.

By including a number of distributed energy storage elements, each connected e.g. in parallel with the existing DC link capacitor in chain-link configurations, the storage elements in the converter may absorb or supply energy variations between the converter legs, which minimizes the valve (cell) requirements for voltage and current. Further, the use of storage elements minimizes losses through reduction of the number of cells or reduction of the current rating. The energy storage elements could for example consist of superconducting magnetic energy storage (SMES), batteries, flywheels, super-capacitors etc. When a FACTS device is equipped with energy storage for active power grid support (typically a STATCOM with battery energy storage system (BESS)) the concept can be used with a relatively small amount of additional storage capacity, or without additional storage at all. The invention gives increased flexibility for the compensation of negative sequence currents. It maintains the cascaded multi-level structure to deal with high voltages and reduces the need to de-rate or dimension the semiconductors for higher voltage or current due to the reduced need, or no need at all, of using a zero sequence current/voltage.

A difference to the prior art is that there may be no substantial net active power exchanged between the converter and the AC network caused by the use of the additional energy storage elements, i.e. the active power added to each phase may have an average value of substantially zero, e.g. if two phases absorb 5 MW but the remaining leg supplies 10 MW. This means in accordance with the present invention that the energy storage is used for enhancement of the internal converter functionality, not to support the AC network, this allows the energy storage to be of a smaller optimised size. However, net active power exchange may occur, e.g. if a BESS is used, but typically not as a result of the use of embodiments of the present invention. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

## BRIEF DESCRIPTION OF THE DRAWINGS

Embodiments will be described, by way of example, with reference to the accompanying drawings, in which:

Fig 1 is a schematic circuit diagram of an embodiment of a converter in delta configuration, in accordance with the present invention.

Fig 2 is a schematic circuit diagram of an embodiment of a converter in wye (Y) configuration, in accordance with the present invention.

Fig 3 is a schematic circuit diagram of an embodiment of a converter in wye (Y) configuration, in accordance with the present invention.

Fig 4 is a schematic circuit diagram of an embodiment of a converter in wye (Y) configuration with one common DC link, in accordance with the present invention.

Fig 5 is a schematic circuit diagram of an embodiment of a converter in wye (Y) configuration with three common DC links, in accordance with the present invention.

Fig 6 is a schematic circuit diagram of an embodiment of a converter in wye (Y) configuration with three common DC links and an inner delta connection of cells, in accordance with the present invention.

Fig 7 is a schematic circuit diagram of an embodiment of a modular multi-level converter (M2LC) with fractional high voltage DC link voltage, in accordance with the present invention.

## DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure, as defined by the appended claims, to those skilled in the art. Like numbers refer to like elements throughout the description.

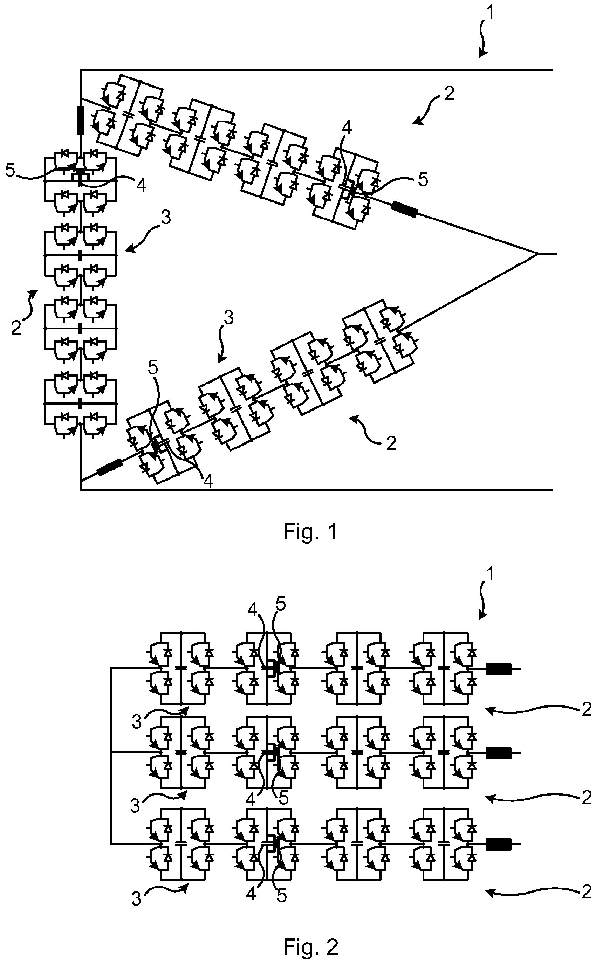

Figure 1 is a schematic illustration of a multilevel power converter 1 with three phase legs 2 connected in a standard delta configuration. In accordance with the present invention, at least one cell 3 in each leg 2 comprises an energy storage element 5, in the figure connected in parallel over the DC link capacitor 4 in the cell 3. In other embodiments, more than one cell 3 in each phase may comprise such an energy storage element 5, e.g. all of the cells. Typically, the same number of cells 3 in each leg 2 comprises an energy storage element 5, for symmetrical control, but not necessarily. Similarly, the energy storages are typically of the same size and type in each leg, or within 15 each leg. Any number of cells 3 may be comprised in each leg 2, depending on the use of the converter, but this is generally known in the art. It is noted that in order to simplify the figures herein, only one cell in each leg 2 has been marked with a reference number.

Figure 2 is another converter 1 which differs from the converter of figure 1 in that it is in the wye configuration, but otherwise the discussion in relation to figure 1 is also relevant to figure 2.

The converter 1 of the present invention may comprise a control unit configured for controlling the converter, and thus for performing an embodiment of the method aspect of the present invention. Thus, the control unit may, in a first step, obtain information about phase voltages of the AC network, phase currents consumed by the load, and power injection of the converter 1, at a PCC of the converter. The AC network acts as a voltage source on the different phases (typically three phases, but any number of at least two phases may be used with embodiments of the present invention), while the load (or loads) consumes electrical current on corresponding phases. Any unbalance on either the network phases or on the load phases induces the use of the energy storages in accordance with the present invention in order to reduce the need for a zero sequence current which would infer the need of a higher power rating of the converter components.

Based on the obtained information, the control unit may then, in a second step, calculate the amount of active power to be supplied (internally in the converter) by each phase leg 2 of the converter 1.

Further, based on the calculation, as well as on the obtained information, the control unit may determine an amount of power to be absorbed or supplied in each converter phase leg 2 by one or more energy storage element(s) 5 comprised, in addition to the DC link capacitor 4, in at least one cell 3 in each phase leg, for achieving the capacitor voltage balancing. The capacitor voltage balancing is performed without inducing any extra net active power exchange between the converter and the AC network.

There will typically be small amounts of active power exchange between the converter 1 and the AC network but this is not the purpose of the extra energy storage elements 5 (super-capacitors, batteries etc.). In an existing converter (without any energy storage elements) there will be small amounts of active power exchange but the converter can only absorb or supply active power for less than a second (by means of the DC link converters 4), otherwise the capacitor voltages will collapse or increase too high. Prior-art solutions have proposed to include a large capacity energy storage so that the converter can supply/absorb active power from the grid for much longer than a second, to provide extra grid support. The present invention, however, is proposing energy storage elements 5, not to achieve long term exchanges of active power with the AC network, but to absorb or supply the active power imbalances between phases within the converter 1 to help the functionality of the converter i.e. to minimise the amount of zero sequence current which would otherwise be needed.

Example 1

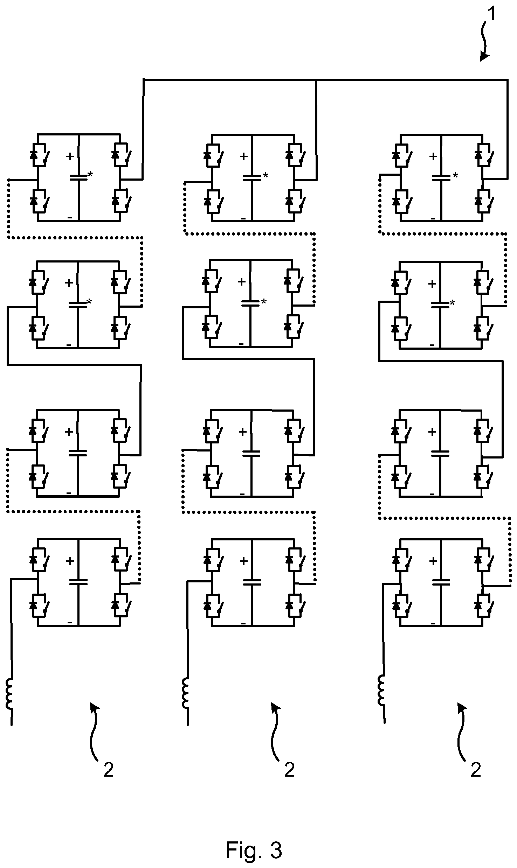

One variant of the inventive concept is to use electric double layer capacitors, also known as super-capacitors or ultra-capacitors, as the energy storage elements 5. This variant of the invention is shown in figure 3, where the capacitors shown with a "*" represent super-capacitors 5 in addition to the regular DC link capacitors 4.

An example FACTS application will be briefly analysed to demonstrate the potential cost savings provided by the invention. The wye connected configuration is considered for a 36 kV, 100 MVA application with a maximum negative sequence current of 40% i.e:

$$I_{neg} = 0.4 \times \frac{100 \times 10^6}{3 \times \frac{36 \times 10^3}{\sqrt{3}}}$$

To compensate for negative sequence currents in the wye configuration, according to prior art, a zero sequence voltage must be injected in each phase-leg. To operate the STATCOM over a suitable range of negative sequence currents, the phase-legs must be rated for twice the line to neutral voltage. This results in twice the number of series connected cells being required for each phase-leg. This in turn can increase the total converter cost (including losses) by up to 65%.

The wye connected chain-link configuration will now be considered with the inclusion of super-capacitors in accordance with the present invention and as illustrated in figure 3. With a 40% negative sequence current, the active power that must be absorbed or supplied by an individual phase-leg 2 will be:

$$P_{neg} = 0.4 \times \frac{100 \times 10^6}{3} = 13.3 \times 10^6 \ J/s \ .$$

An indicative price for a super-capacitor 5 may be \$20USD/Wh or

$$\frac{20}{60 \times 60} = \$0.0055/J \ .$$

The cost per second of stored energy is then given by:

$$Cost = 0.0055 \times P_{neg} = \$74{,}074 USD \ .$$

This cost can be compared to the present cost of capacitors utilized in Static VAr Compensator (SVC) Light generation two. A 36 kV, 100 MVA application would utilize N=33 series connected cells. The DC link voltage would be 2.2 kV and the cell capacitance 18 mF. The total energy will then be:

$$E = 0.5NCV^2 = 1.3 \times 10^6 \ J \ .$$

A typical cost figure is \$0.1/J of stored capacitor energy. So the total cost will be given by:

$$0.1 \times E = \$130{,}000 \; USD$$

From these calculations we can see that the cost of the super-capacitors 5 may not increase the total cost of capacitance in the prior art solution, depending on the duration of time for which a phase-leg 2 must absorb the extra unbalanced energy. So, if the converter capacitance cost stays relatively constant, then the total cost of the converter 1 may be reduced by up to 40% through significant reduction of the number of series connected cells 3.

Example 2

The negative sequence component when compensating an electric arc furnace over a 100 s period is considered. The negative sequence component is normalised so that a value of 1 represents the maximum negative sequence component over the 100 s period.

Existing chain-link topologies are currently designed to compensate the maximum negative sequence component. However the average value of the negative sequence component in the example is 0.47. Therefore, the required silicon area could be significantly reduced if the STATCOM is rated to compensate only for the average negative sequence component. To ensure capacitor voltage balance at times when the negative sequence component exceeds the average, high density energy storage elements 5 could be utilised in accordance with the present invention.

The number of series connected cells which would utilize super-capacitors or other energy storage elements 5 would be dependent on the total number of cells 3 in each phase-leg 2 and the ratio of negative sequence current to positive sequence current. The optimal distribution of the super-capacitors will also be determined by the modulation strategy and how effectively it distributes the energy contained in each phase-leg.

Example 3

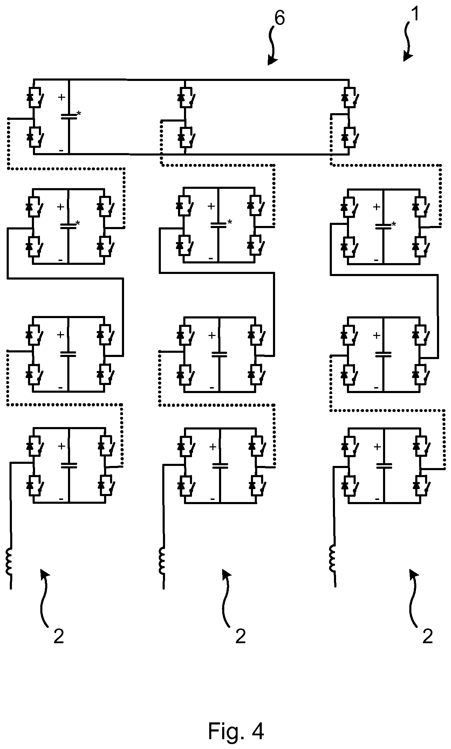

There are many different topologies which the present invention could be employed in, some of which are illustrated in figures 4-7. These will provide more flexibility in determining the optimal distribution of the storage elements 5, e.g. super-capacitors, throughout the converter 1.

Figure 4 illustrates a wye connected chain link converter 1 comprising one common DC link 6.

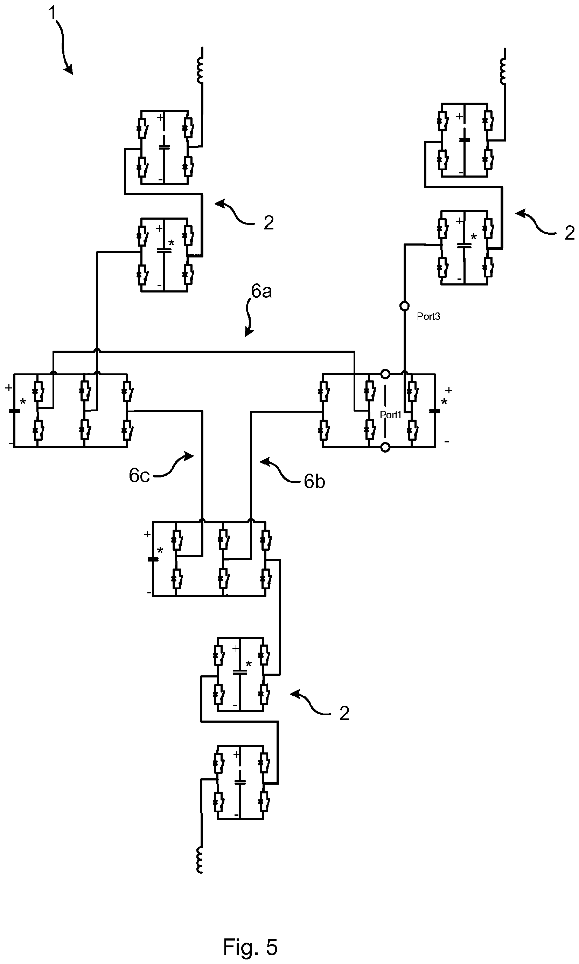

Figure 5 illustrates a wye connected chain link converter 1 comprising three common DC links 6a, 6b and 6c.

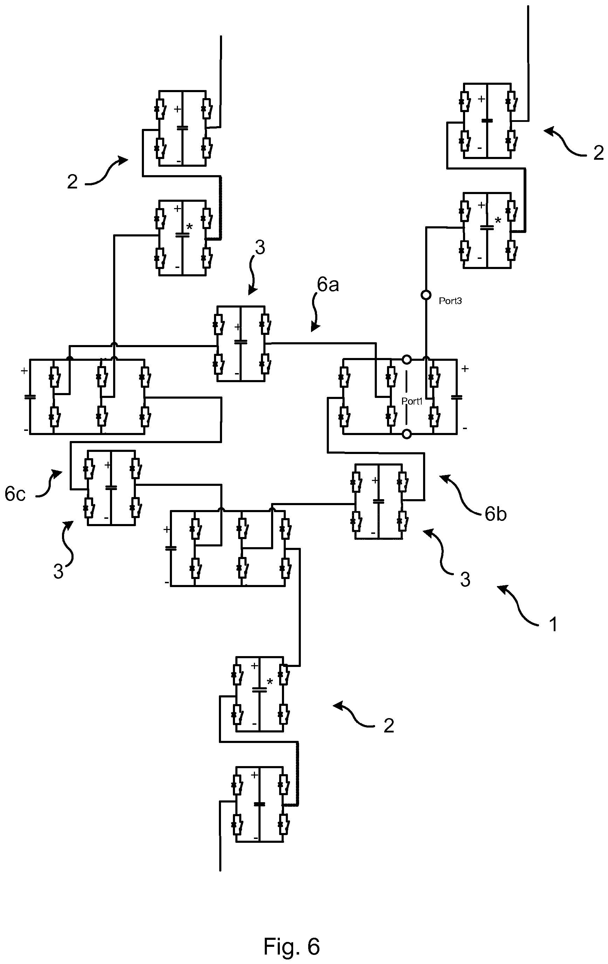

Figure 6 illustrates a wye connected chain link converter 1 comprising three common DC links 6a, 6b and 6c and an inner delta connection of cells 3.

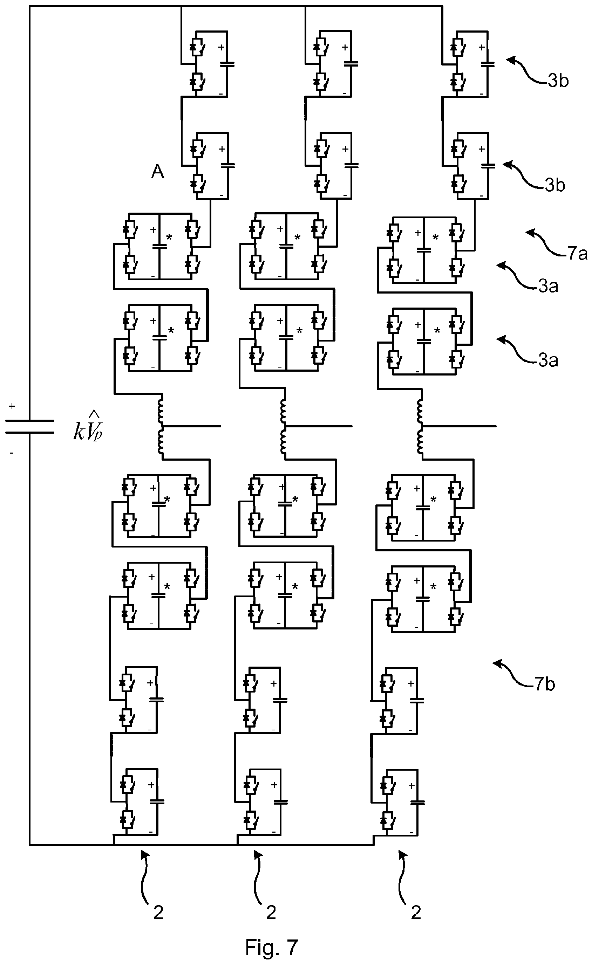

Figure 7 illustrates an M2LC with fractional high voltage DC link voltage. Each converter arm 7a and 7b of each leg 2 consists of a number of full-bridges (H-bridges) 3a complimented with half-bridges 3b. Typically, the high voltage DC link in such a converter 1 is rated at twice the peak AC phase to neutral voltage. However, in accordance with the present invention, the DC link voltage is chosen at a fraction of the typical value. The fractional value determines what proportion of each arm voltage is synthesized by full-bridges 3a and what can be synthesized with half-bridges 3b. Including high density energy storage 5 in the full bridge cells 3a allows a significant reduction in capacitance values used in the half-bridge cells 3b. An example of this is shown below, in example 4.

Example 4

If we consider a line current for phase A (in figure 7) described by:

$$i_a(t) = \hat{I}_P \cos(\omega t + \phi_1) + \hat{I}_N \cos(\omega t + \phi_2)$$

Then the lower arm 7b current will be:

$$i_{a,l}(t) = \frac{\hat{I}_P}{2} \cos(\omega t + \phi_1) + \frac{\hat{I}_N}{2} \cos(\omega t + \phi_2)$$

The phase to neutral voltage for the A phase will be:

$$v_a(t) = \hat{V}_P \cos(\omega t)$$

The lower arm voltage that must be synthesized will be:

$$v_{a,l}(t) = k\hat{V}_P + \hat{V}_P \cos(\omega t)$$

The root mean square (RMS) power that the lower leg will absorb is determined by the cross product of current flowing through the arm 7b and the voltage the arm synthesizes:

$$P_{a,l}(t) = v_{a,l}(t) \times i_{a,l}(t)$$

$$= \left(k\hat{V}_P + \hat{V}_P \cos(\omega t)\right) \times \left(\frac{\hat{I}_P}{2}\cos(\omega t + \phi_1) + \frac{\hat{I}_N}{2}\cos(\omega t + \phi_2)\right)$$

As $\phi_1 = \pm 90$, the product of the positive sequence voltage and positive sequence current will produce zero average active power. The cross product of the DC voltage component with either of the current components also produces zero average active power. Therefore the average RMS active power can be expressed by:

$$P_{a,l,rms} = \frac{\hat{V}_P \hat{I}_N}{4}\cos(\phi_2)$$

The average component is removed through a DC circulating current, so the arm current becomes:

$$i_{a,l}(t) = \frac{\hat{I}_P}{2}\cos(\omega t + \phi_1) + \frac{\hat{I}_N}{2}\cos(\omega t + \phi_2) + I_0$$

The cross product of the DC circulating current and the arm's DC voltage component forms average active power:

$$P_{a,l,0} = k\hat{V}_P I_0$$

For the capacitors 4 to remain balanced, the following condition must be met:

$$P_{a,l,rms} = P_{a,l,0}$$

$$\frac{\hat{V}_P \hat{I}_N}{4}\cos(\phi_2) = k\hat{V}_P I_0$$

$$I_0 = \frac{\hat{I}_N \cos(\phi_2)}{4k}$$

This means to balance the capacitor voltages the magnitude of the DC circulating current is determined by the choice of k. Therefore by choosing the magnitude of the high voltage DC link voltage an optimal trade-off between DC voltage and DC circulating current can be approached.

The present disclosure has mainly been described above with reference to a few embodiments. However, as is readily appreciated by a person skilled in the art, other embodiments than the ones disclosed above are equally possible within the scope of the present disclosure, as defined by the appended claims.

**Claims**

1. A multilevel power converter (1) connectable to an alternating current, AC, network and a load, the multilevel power converter (1) comprising:

at least a first phase leg (2) and a second phase leg (2), each of the first phase leg and the second phase leg comprising a plurality of cascaded chain link connected cells (3), each cell (3) comprising a respective direct current, DC, link capacitor (4);

a respective energy storage element (5) connected in parallel with the respective DC link capacitor (4) in a respective at least one cell (3) of each of the at least a first phase leg (2) and a second phase leg (2), **characterized in that**:

the respective energy storage element (5) is configured for absorbing and supplying active power in the respective phase leg (2) for performing internal DC link capacitor voltage balancing; and

the multilevel power converter (1) further comprises a control unit configured to:

obtain information about phase voltages of the AC network, phase currents consumed by the load, and power injection of the multilevel power converter (1), at a point of common coupling, PCC, of the multilevel power converter (1);

based on the obtained information, calculate an amount of active power to be supplied by each of the first phase leg (2) and the second phase leg (2); and

based on the calculation, determining an amount of power to be respectively absorbed or supplied in each of the at least a first phase leg (2) and a second phase leg (2) a by means of the respective energy storage element (5) of each of the at least a first phase leg (2) and a second phase leg (2), thereby compensating for unbalances between phases of the AC network or phases on the load without inducing any extra net active power exchange between the multilevel power converter (1) and the AC network.

2. The multilevel power converter (1) of claim 1, wherein each of the respective energy storage elements (5) comprises a superconducting magnetic energy storage, a battery, a flywheel or a super-capacitor, preferably a super-capacitor.

3. The multilevel power converter (1) of any preceding claim, wherein at least half of the cells (3) in each of the first phase leg (2) and the second phase leg (2) each comprises a respective energy storage element (5) configured for the absorbing and supplying of energy in the respective phase leg (2).

4. A flexible alternating current transmission system, FACTS, comprising the multilevel power converter (1) of any preceding claim.

5. A static synchronous compensator, STATCOM, comprising the multilevel power converter (1) of any of claims 1 to 3.

6. A method for performing internal DC link capacitor (4) voltage balancing within a multilevel power converter (1) in order to compensate for unbalances between phases of an AC network and a load which the multilevel power converter is connectable to, the multilevel power converter (1) comprising at least a first phase leg (2) and a second phase leg (2), each phase leg comprising a plurality of cascaded chain link connected cells (3), each cell (3) comprising a DC link capacitor (4), the method comprising:

obtaining information about phase voltages of the AC network, phase currents consumed by the load, and power injection of the multilevel power converter (1), at a point of common coupling, PCC, of the multilevel power converter (1);

based on the obtained information, calculating an amount of active power to be supplied by each of the first phase leg (2) and the second phase leg (2); and

based on the calculation, determining an amount of power to be respectively absorbed or supplied in each of the at least a first phase leg (2) and a second phase leg (2) by means of a respective energy storage element (5) connected in parallel with the respective DC link capacitor (4) in a respective at least one cell (3) of each of the at least a first phase leg (2) and a second phase leg (2), thereby compensating for unbalances between phases of the AC network or phases on the load without inducing any extra net active power exchange between the multilevel power converter (1) and the AC network.

**Patentansprüche**

1. Mehrpegelumrichter (1), der an ein Wechselstromnetz und eine Last angeschlossen werden kann, wobei der Mehrpegelumrichter (1) Folgendes umfasst:

mindestens einen ersten Phasenzweig (2) und einen zweiten Phasenzweig (2), wobei sowohl der erste Phasenzweig als auch der zweite Phasenzweig eine Vielzahl von kaskadierten, kettengeschalteten Zellen (3) umfasst, wobei jede Zelle (3) einen jeweiligen Zwischenkreiskondensator (4) umfasst;

ein jeweiliges Energiespeicherelement (5), das parallel zu dem jeweiligen Zwischenkreiskondensator (4) in einer jeweiligen mindestens einen Zelle (3) des mindestens einen ersten Phasenzweigs (2) und eines zweiten Phasenzweigs (2) geschaltet ist, **dadurch gekennzeichnet, dass**:

das jeweilige Energiespeicherelement (5) so ausgebildet ist, dass es in dem jeweiligen Phasenzweig (2) Wirkleistung aufnimmt und abgibt, um einen internen Zwischenkreiskondensator-Spannungsausgleich durchzuführen; und

der Mehrpegelumrichter (1) ferner eine Steuereinheit umfasst, die für Folgendes ausgebildet ist:

Erhalten von Informationen über die Phasenspannungen des Wechselstromnetzes, die von der Last aufgenommenen Phasenströme und die Leistungseinspeisung des Mehrpegelumrichters (1) an einem Verknüpfungspunkt (PCC) des Mehrpegelumrichters (1) ;

auf der Grundlage der erhaltenen Informationen, Berechnen einer Menge an Wirkleistung, die von jedem des ersten Phasenzweigs (2) und des zweiten (2) Phasenzweigs zu liefern ist; und

auf der Grundlage der Berechnung, Bestimmen einer Leistungsmenge, die in jedem des mindestens einen ersten Phasenzweigs (2) und eines zweiten Phasenzweigs (2) mittels des jeweiligen Energiespeicherelements (5) jedes des mindestens einen ersten Phasenzweigs (2) und eines zweiten Phasenzweigs (2) absorbiert bzw. geliefert werden soll, wodurch Ungleichgewichte zwischen Phasen des Wechselstromnetzes oder Phasen an der Last kompensiert werden, ohne einen zusätzlichen Netto-Wirkleistungsaustausch zwischen dem Mehrpegelumrichter (1) und dem Wechselstromnetz zu induzieren.

2.  Mehrpegelumrichter (1) nach Anspruch 1, wobei jedes der jeweiligen Energiespeicherelemente (5) einen supraleitenden magnetischen Energiespeicher, eine Batterie, ein Schwungrad oder einen Superkondensator, vorzugsweise einen Superkondensator, umfasst.

3.  Mehrpegelumrichter (1) nach einem der vorhergehenden Ansprüche, wobei mindestens die Hälfte der Zellen (3) im ersten Phasenzweig (2) und im zweiten Phasenzweig (2) jeweils ein entsprechendes Energiespeicherelement (5) umfasst, das für die Aufnahme und Abgabe von Energie im jeweiligen Phasenzweig (2) ausgebildet ist.

4.  Flexibles Wechselstromübertragungssystem (FACTS), das den Mehrpegelumrichter (1) nach einem der vorhergehenden Ansprüche umfasst.

5.  Statischer Synchronkompensator (STATCOM) mit dem Mehrpegelumrichter (1) nach einem der Ansprüche 1 bis 3.

6.  Verfahren zum Durchführen eines internen Spannungsausgleichs des Gleichspannungskondensators (4) innerhalb eines Mehrpegelumrichters (1), um Ungleichgewichte zwischen Phasen eines Wechselstromnetzes und einer Last, an die der Mehrpegelumrichter anschließbar ist, zu kompensieren, wobei der Mehrpegelumrichter (1) mindestens einen ersten Phasenzweig (2) und einen zweiten Phasenzweig (2) umfasst, wobei jeder Phasenzweig eine Vielzahl von kaskadierten, kettengeschalteten Zellen (3) umfasst, wobei jede Zelle (3) einen Gleichspannungskondensator (4) umfasst, wobei das Verfahren Folgendes umfasst:

Erhalten von Informationen über die Phasenspannungen des Wechselstromnetzes, die von der Last aufgenommenen Phasenströme und die Leistungseinspeisung des Mehrpegelumrichters (1) an einem Verknüpfungspunkt (PCC) des Mehrpegelumrichters (1) ;

auf der Grundlage der erhaltenen Informationen, Berechnen einer Menge an Wirkleistung, die von jedem des ersten Phasenzweigs (2) und des zweiten Phasenzweigs (2) zu liefern ist; und

auf der Grundlage der Berechnung, Bestimmen einer Leistungsmenge, die in jedem des mindestens einen ersten Phasenzweigs (2) und eines zweiten Phasenzweigs (2) mittels eines jeweiligen Energiespeicherelements (5), das parallel zu dem jeweiligen Zwischenkreiskondensator (4) in einer jeweiligen mindestens einen Zelle (3) jedes des mindestens einen ersten Phasenzweigs (2) und eines zweiten Phasenzweigs (2) geschaltet ist, absorbiert bzw. geliefert werden soll, wodurch Ungleichgewichte zwischen Phasen des Wechselstromnetzes oder Phasen an der Last kompensiert werden, ohne einen zusätzlichen Wirkleistungsaustausch zwischen dem Mehrpegelumrichter (1) und dem Wechselstromnetz zu induzieren.

**Revendications**

1. Convertisseur de puissance multiniveau (1) pouvant être connecté à un réseau à courant alternatif, CA, et à une charge, le convertisseur de puissance multiniveau (1) comprenant :

   au moins une première branche de phase (2) et une deuxième branche de phase (2), chacune de la première branche de phase et de la deuxième branche de phase comprenant une pluralité de cellules (3) connectées en chaîne en cascade, chaque cellule (3) comprenant un condensateur de liaison à courant continu, CC, respectif (4) ;
   un élément de stockage d'énergie respectif (5) connecté en parallèle avec le condensateur de liaison CC respectif (4) dans au moins une cellule (3) respective de chacune de l'au moins une première branche de phase (2) et une deuxième branche de phase (2),
   **caractérisé en ce que** :

   l'élément de stockage d'énergie respectif (5) est configuré pour absorber et fournir de la puissance active dans la branche de phase respective (2) pour réaliser un équilibrage de tension de condensateur de liaison CC interne ; et
   le convertisseur de puissance multiniveau (1) comprend en outre une unité de commande configurée pour :

   obtenir des informations sur des tensions de phase du réseau CA, des courants de phase consommés par la charge, et une injection de puissance du convertisseur de puissance multiniveau (1), à un point de couplage commun, PCC, du convertisseur de puissance multiniveau (1) ;
   sur la base des informations obtenues, calculer une quantité de puissance active à fournir par chacune de la première branche de phase (2) et de la deuxième branche de phase (2) ; et
   sur la base du calcul, déterminer une quantité de puissance à respectivement absorber ou fournir dans chacune de l'au moins une première branche de phase (2) et une deuxième branche de phase (2) au moyen de l'élément de stockage d'énergie respectif (5) de chacune de l'au moins une première branche de phase (2) et une deuxième branche de phase (2), compensant ainsi des déséquilibres entre des phases du réseau CA ou des phases sur la charge sans induire d'échange de puissance active nette supplémentaire quelconque entre le convertisseur de puissance multiniveau (1) et le réseau CA.

2. Convertisseur de puissance multiniveau (1) selon la revendication 1, chacun des éléments de stockage d'énergie respectifs (5) comprenant un stockage d'énergie magnétique supraconductrice, une batterie, un volant d'inertie ou un supercondensateur, de préférence un supercondensateur.

3. Convertisseur de puissance multiniveau (1) selon l'une quelconque des revendications précédentes, au moins la moitié des cellules (3) dans chacune de la première branche de phase (2) et de la deuxième branche de phase (2) comprenant chacune un élément de stockage d'énergie respectif (5) configuré pour l'absorption et la fourniture d'énergie dans la branche de phase respective (2) .

4. Système de transmission flexible en courant alternatif, FACTS, comprenant le convertisseur de puissance multiniveau (1) selon l'une quelconque des revendications précédentes.

5. Compensateur synchrone statique, STATCOM, comprenant le convertisseur de puissance multiniveau (1) selon l'une quelconque des revendications 1 à 3.

6. Procédé de réalisation d'un équilibrage de tension de condensateur de liaison CC (4) interne au sein d'un convertisseur de puissance multiniveau (1) dans le but de compenser des déséquilibres entre des phases d'un réseau CA et d'une charge auxquels le convertisseur de puissance multiniveau peut être connecté, le convertisseur de puissance multiniveau (1) comprenant au moins une première branche de phase (2) et une deuxième branche de phase (2), chaque branche de phase comprenant une pluralité de cellules (3) connectées en chaîne en cascade, chaque cellule (3) comprenant un condensateur de liaison CC (4), le procédé comprenant :

   l'obtention d'informations sur des tensions de phase du réseau CA, des courants de phase consommés par la charge, et une injection de puissance du convertisseur de puissance multiniveau (1), à un point de couplage commun, PCC, du convertisseur de puissance multiniveau (1) ;
   sur la base des informations obtenues, le calcul d'une quantité de puissance active à fournir par chacune de la première branche de phase (2) et de la deuxième branche de phase (2) ; et

sur la base du calcul, la détermination d'une quantité de puissance à respectivement absorber ou fournir dans chacune de l'au moins une première branche de phase (2) et une deuxième branche de phase (2) au moyen d'un élément de stockage d'énergie respectif (5) connecté en parallèle avec le condensateur de liaison CC (4) dans au moins une cellule (3) respective de chacune de l'au moins une première branche de phase (2) et une deuxième branche de phase (2), compensant ainsi des déséquilibres entre des phases du réseau CA ou des phases sur la charge sans induire d'échange de puissance active nette supplémentaire quelconque entre le convertisseur de puissance multiniveau (1) et le réseau CA.

Fig. 1

Fig. 2

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010124706 A

**Non-patent literature cited in the description**

- **HIROFUMI AKAGI.** Classification, Terminology and Application of the Modular Multilevel Cascade Converter (MMCC). *IEEE TRANSACTIONS ON POWER ELECTRONICS, INSTITUTE OF ELECTRICAL AND ELECTRONICS ENGINEERS, USA,* 01 November 2021, vol. 26 (11), 3119-3130